# FASCICULE DE BREVET EUROPEEN

(11) **EP 4 409 346 B1**
(45) Date de publication et mention de la délivrance du brevet: **09.12.2026**
(21) Numéro de dépôt: 22789591.9
(22) Date de dépôt: 27.09.2022
(51) Int. Cl.: G02B 21/00, G02B 6/26, G02B 6/42

(54) **MICROSCOPE OPTIQUE COMPRENANT UN DISPOSITIF OPTO-MÉCANIQUE DE RÉGLAGE FIN ET PROCÉDÉ D'AJUSTEMENT OPTO-MÉCANIQUE**
OPTISCHES MIKROSKOP MIT OPTOMECHANISCHER FEINJUSTAGEEINRICHTUNG UND OPTOMECHANISCHES EINSTELLVERFAHREN
OPTICAL MICROSCOPE COMPRISING AN OPTOMECHANICAL FINE-ADJUSTMENT DEVICE AND OPTOMECHANICAL ADJUSTMENT METHOD

(30) Priorité: 29.09.2021 FR 2110276
(43) Date de publication de la demande: 07.08.2024
(73) Titulaire: Horiba France SAS, 91120 Palaiseau (FR)
(72) Inventeur: GAVRILYUK, Vasily, deceased (FR); YAGOVKIN, Alexander, 59130 Lambersart (FR)
(74) Mandataire: Jacobacci & Partners France
(86) Numéro de dépôt international: PCT/EP2022/076871
(87) Numéro de publication internationale: WO 2023/052371

(56) Documents cités:
- DE-A1- 19 627 568
- GB-A- 2 262 360
- US-A- 4 515 447
- US-A1- 2003 109 774
- SCHRUM K F ET AL: "DESCRIPTION AND THEORY OF A FIBER-OPTIC CONFOCAL AND SUPER-FOCAL RAMAN MICROSPECTROMETER", APPLIED SPECTROSCOPY, THE SOCIETY FOR APPLIED SPECTROSCOPY. BALTIMORE, US, vol. 50, no. 9, 1 September 1996 (1996-09-01), pages 1150 - 1155, XP000642358, ISSN: 0003-7028, DOI: 10.1366/0003702963905187
- KIMURA S ET AL: "CONFOCAL SCANNING OPTICAL MICROSCOPE USING SINGLE-MODE FIBER FOR SIGNAL DETECTION", APPLIED OPTICS, OPTICAL SOCIETY OF AMERICA, WASHINGTON, DC, US, vol. 30, no. 16, 1 June 1991 (1991-06-01), pages 2143 - 2150, XP000206274, ISSN: 0003-6935, DOI: 10.1364/AO.30.002143

## Description

### Domaine technique

La présente invention concerne le domaine technique de la microscopie optique.

Elle concerne plus particulièrement un dispositif et une méthode d'ajustement opto-mécanique d'un faisceau lumineux collecté vers un détecteur dans un microscope confocal.

Un tel dispositif trouve notamment des applications dans le filtrage spatial de faisceaux lumineux ou le couplage à une fibre optique.

### Technique antérieure

Dans un microscope confocal, et en particulier dans un microscope Raman confocal, on utilise un filtrage spatial du rayonnement issu d'un échantillon et collecté par un objectif de microscope. A cet effet, on utilise un diaphragme confocal comprenant un trou confocal ou une fibre optique ayant des dimensions transverses micrométriques. Le diaphragme confocal est généralement disposé dans le tube du microscope dans un plan dit de Fourier, conjugué optiquement avec un plan objet via l'objectif de microscope et une lentille de tube. Un système optique transmet le signal filtré spatialement en direction d'un système de détection, par exemple de type spectrométrique ou pour des mesures résolues temporellement, selon les exigences de l'acquisition de l'information désirée. Le filtrage spatial permet d'extraire le signal optique provenant d'un point d'intérêt de l'échantillon et de le séparer des signaux optiques provenant d'autres zones de l'échantillon. En particulier, dans un microscope Raman, le filtrage spatial permet d'extraire le signal Raman émis par une zone précise de l'échantillon.

Toutefois, le diaphragme confocal a généralement des dimensions transverses micrométriques. Ces dimensions sont déterminées par la fonction d'étalement du point (ou PSF pour Point Spread Function en terminologie anglo-saxonne) générée par diffraction du faisceau lumineux collecté sur l'objectif de microscope. Ces dimensions micrométriques rendent nécessaire de diriger le faisceau collecté avec une grande précision vers le diaphragme confocal. Le microscope doit donc présenter une très grande stabilité et rigidité opto-mécanique.

Le diaphragme confocal est généralement monté à l'intérieur du corps du microscope. La position du diaphragme confocal alignée sur l'axe optique du microscope résulte d'un réglage en usine. Le diaphragme confocal n'est généralement pas accessible à l'utilisateur. Cette configuration permet de protéger le diaphragme confocal des influences extérieures.

Dans un cas particulier, le microscope est relié par fibre optique à un système de détection. L'extrémité de la fibre optique forme un diaphragme confocal dont les dimensions sont déterminées par l'ouverture de la fibre optique. Le système optique du microscope est généralement adapté pour focaliser le faisceau avec une ouverture de même valeur que l'ouverture numérique de la fibre. Le système optique du microscope est aussi corrigé de l'aberration sphérique. Pour aligner l'extrémité de la fibre optique sur le faisceau focalisé, il est connu d'utiliser un mécanisme de positionnement de la fibre optique. Toutefois, un tel mécanisme peut poser des difficultés car un mouvement de la fibre, par exemple de flexion ou torsion, peut transmettre une certaine force à ce mécanisme et provoquer le désalignement et une perte du signal.

Il est souhaitable de disposer d'un système de réglage dans un microscope optique confocal ou dans un microscope Raman confocal, relié en espace libre ou par fibre optique à un système de détection, pour permettre d'ajuster l'alignement optique tout en garantissant la stabilité de l'ensemble.

Le document DE 196 27 568 A1 divulgue un microscope confocal dans lequel un prisme rotatif est utilisé pour ajuster le faisceau par rapport au trou confocal. Les documents Schrum et al.: "Description and theory of a fiber-optic confocal and super-focal Raman microspectrometer" (1996) et Kimura et al.: "Confocal scanning microscope using single-mode fiber for signal detection" (1991) divulguent des microscopes confocaux dans lesquels une fibre optique est utilisée comme diaphragme confocal.

### Exposé de l'invention

Afin de remédier aux inconvénients précités de l'état de la technique, la présente invention propose un microscope optique comprenant un système optique et un diaphragme confocal, le diaphragme confocal étant disposé dans un plan de Fourier du microscope transversalement à un axe optique du microscope, le plan de Fourier étant conjugué optiquement avec un plan objet via le système optique, le diaphragme confocal étant fixe par rapport au corps du microscope, le microscope étant apte à collecter un faisceau lumineux issu du plan objet, le système optique étant adapté pour focaliser le faisceau lumineux dans le plan de Fourier et pour injecter au moins une partie du faisceau lumineux à travers le diaphragme confocal, le diaphragme confocal étant formé par une extrémité d'une fibre optique ayant un cœur de dimensions transverses micrométriques et le système optique présentant une ouverture numérique image adaptée à celle de la fibre optique.

Selon la présente invention, le microscope optique comporte un composant optique réfractif disposé entre le système optique et le diaphragme confocal, le composant optique réfractif étant monté mobile en rotation transversalement à l'axe optique du microscope, de façon à ajuster une position latérale du faisceau lumineux focalisé par rapport au diaphragme confocal, le composant optique réfractif comprenant une lentille convergente montée mobile en rotation autour d'un centre de rotation sur l'axe optique du microscope entre la lentille et le plan focal du système optique.

Le diaphragme confocal est formé par une extrémité d'une fibre optique ayant un cœur de dimensions transverses micrométriques.

De façon avantageuse, le microscope optique comprend un connecteur de fibre optique, le connecteur de fibre optique étant fixé rigidement au corps du microscope, le connecteur de fibre optique étant apte à recevoir l'extrémité de fibre optique de manière à ce que l'extrémité de fibre optique soit disposée dans un plan image réel du microscope.

Le diaphragme confocal est formé par une extrémité d'une fibre optique ayant une ouverture numérique NA déterminée, par exemple d'environ 0.22, le système optique présente une ouverture numérique image adaptée à celle de la fibre optique et le composant optique réfractif comprend une lentille convergente, par exemple une lentille plano convexe, montée mobile en rotation autour d'un centre de rotation sur l'axe optique du microscope entre la lentille et le plan focal. Avantageusement dans cet exemple, le système optique présente une ouverture numérique image supérieure à 0,1 par exemple de l'ordre de 0.2.

Selon un aspect particulier et avantageux, le microscope optique comprend une source laser adaptée pour générer un faisceau laser d'excitation, le diaphragme confocal étant disposé entre le système optique et un détecteur adapté pour détecter un rayonnement de diffusion Raman.

Avantageusement, le microscope comprend un boîtier opaque, le diaphragme confocal et le composant optique réfractif étant disposés à l'intérieur du boîtier, le composant optique réfractif étant monté sur une platine de translation et/ou de rotation, ladite platine comportant des moyens de réglage opto-mécanique, les moyens de réglage opto-mécanique étant accessibles depuis l'extérieur du boîtier.

De façon avantageuse, le système optique comprend un objectif de microscope et une lentille de tube. Avantageusement, l'objectif de microscope forme l'image de l'objet à l'infini et le plan de Fourier est confondu avec le plan image réelle de l'objet en aval de la lentille de tube.

L'invention concerne aussi un procédé de microscopie optique comme défini dans la revendication 6.

Avantageusement, le système optique du microscope comprend un objectif de microscope et une lentille de tube, l'objectif formant une image du plan objet à l'infini.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Brève description des dessins

De plus, diverses autres caractéristiques de l'invention ressortent de la description annexée effectuée en référence aux dessins qui illustrent des formes, non limitatives, de réalisation de l'invention et où :
La figure 1 est une vue schématique en coupe d'un exemple ne relevant pas de l'invention telle que revendiquée,
La figure 2 est une vue en perspective d'un autre exemple ne relevant pas de l'invention telle que revendiquée,
La figure 3 est une vue schématique en coupe de cet autre mode de réalisation de l'invention,
La figure 4 est un graphe illustrant le déplacement des points focaux pour les rayons du plan méridional perpendiculaire à l'axe de rotation d'une lentille plan-convexe induit par la rotation d'un élément optique réfractif de type lentille.

Il est à noter que sur ces figures les éléments structurels et/ou fonctionnels communs aux différentes variantes peuvent présenter les mêmes références.

### Description détaillée

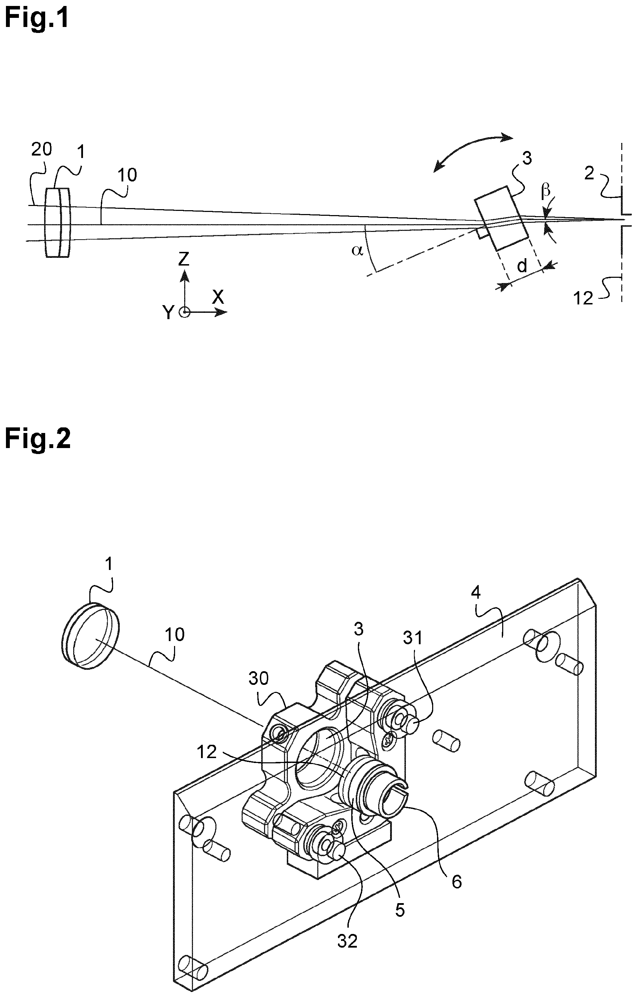

La figure 1 représente une partie d'un instrument, par exemple un microscope optique ou un microscope Raman. On n'a pas représenté sur cette figure la bâti ou corps du microscope ni l'objectif de microscope, ni le système de détection.

Généralement, un tel microscope comporte un objectif de microscope, un tube et une lentille de tube. L'objectif de microscope collecte un faisceau de lumière issu d'un plan objet du microscope. L'objectif est généralement corrigé des aberrations à l'infini forme un faisceau collimaté. La lentille de tube reçoit le faisceau 20 collimaté et en forme l'image dans son plan focal, conjugué optiquement avec le plan objet du microscope. Dans un microscope confocal, un diaphragme confocal est disposé dans ledit plan focal pour filtrer spatialement le signal optique et supprimer les signaux provenant d'autres points que le point d'intérêt dans le plan objet.

Sur la figure 1 on a représenté uniquement la partie du microscope comprise entre un système optique 1 et le plan image réel 12. Le système optique 1 représente par exemple la lentille de tube d'un microscope confocal. Un diaphragme confocal 2 est disposé dans le plan image réel 12, qui est ici confondu avec le plan focal du système optique 1. Le diaphragme confocal 2 comporte une ouverture généralement en forme de disque. Le diamètre de l'ouverture est généralement compris entre 20 et 100 micromètres. A titre d'exemple, on utilise un diaphragme confocal 2 à ouverture circulaire ayant un diamètre de 30 à 50 microns.

On a représenté sur la figure 1 un repère orthonormé. L'axe optique 10 du microscope est ici parallèle à l'axe Z.

Les paragraphes [0033] à [0045] et les figures 1 et 2 décrivent des exemples ne relevant pas de l'invention telle que revendiquée. Ils sont conservés à titre de compréhension du contexte technique de l'invention.

Selon la présente divulgation, un composant optique réfractif 3 est disposé entre le système optique 1 et le diaphragme confocal 2. A titre d'exemple sur la figure 1, le composant optique réfractif 3 est constitué d'une lame à faces planes et parallèles, d'épaisseur d. Le composant optique réfractif 3 est monté mobile en rotation suivant au moins un axe transverse à l'axe optique 10 du microscope.

Par exemple, le composant optique réfractif 3 est monté mobile en rotation autour de l'axe X. La rotation du composant optique réfractif 3 autour de l'axe X permet de faire varier la position du faisceau focalisé dans le plan de Fourier le long de l'axe Y.

De manière analogue, le composant optique réfractif 3 est monté mobile en rotation autour de l'axe Y. La rotation du composant optique réfractif 3 autour de l'axe Y permet de faire varier la position du faisceau focalisé dans le plan de Fourier le long de l'axe X.

De façon avantageuse, le composant optique réfractif 3 est monté mobile en rotation autour de l'axe Y et autour de l'axe X, pour permettre d'ajuster la position en X et en Y du faisceau focalisé dans le plan de Fourier 12.

La résolution latérale d'un microscope optique est déterminée par la longueur d'onde de la lumière utilisée et par l'ouverture numérique de l'objectif de microscope. L'ouverture numérique d'un objectif sans immersion ne peut pas dépasser 1. Le système optique de microscope produit une image réelle de l'échantillon dans le plan du diaphragme confocal 2. On considère ici le microscope comme un système optique aplanétique et l'ouverture numérique dans l'espace image peut être déduite de la condition sine d'Abbe. Pour un microscope ayant un grandissement latéral de 50 (objective 100X et lentille de tube de focale F=100mm), l'ouverture numérique dans l'espace image ne dépasse pas 1/50=0,02. Cette ouverture numérique relativement faible signifie que tous les rayons formant l'image sont peu inclinés par rapport à l'axe optique. L'insertion d'un composant optique réfractif 3 de type lame de verre d'épaisseur d devant le plan image 12 ne détériore pas significativement la qualité de focalisation. On note β l'angle d'incidence du rayon marginal dans l'espace image. L'angle β est ici dans le plan YZ. Avec une ouverture numérique de 0,02 dans l'espace image, l'angle d'incidence β est d'environ 0.02 rad. On calcule comme suit une estimation de l'aberration sphérique produite par une lame de verre à faces planes et parallèles ayant un indice de réfraction n = 1.5 et une épaisseur d = 5mm. [Math. 1] $δs ′ = \frac{{n}^{2} - 1}{2 {n}^{3}} βd$

La résolution axiale peut être estimée selon la condition d'Abbe comme suit dZ=2λ/(NA²), où λ représente la longueur d'onde du faisceau lumineux et NA l'ouverture numérique dans l'espace image.

Dans l'exemple numérique ci-dessus, cette estimation donne une résolution axiale dZ d'environ 2.5 mm pour une longueur d'onde λ de 0.5 µm et une aberration sphérique δs' d'environ 18.5 µm dans le plan de focalisation du faisceau. On constate que l'aberration sphérique induite par la lame à faces planes et parallèles reste limitée et détériore peu la qualité de focalisation.

On note α l'angle d'inclinaison de la lame de verre 3 par rapport à l'axe optique 10 du microscope. A titre d'exemple, sur la figure 1, l'angle α est représenté dans le plan XZ. La rotation de la lame de verre placée entre le système optique 1 et le diaphragme confocal 2 (tel qu'une fibre optique ou un trou confocal) permet d'ajuster précisément la position du faisceau de lumière focalisé par le système optique 1 dans le plan image réel 12, aussi appelé plan de Fourier, en direction du système de détection. Le déplacement du point de focalisation en fonction de l'inclinaison de la lame de verre d'un angle α est être calculé par la formule suivante :
[Math. 2] $displ \left(α, n\right) : = d sin \left(α\right) \left(1-\frac{cos \left(α\right)}{\sqrt{{n}^{2} - sin {\left(α\right)}^{2}}}\right)$
où displ représente le déplacement du faisceau focalisé dans le plan de Fourier 12 et n l'indice de réfraction de la lame à faces planes et parallèles.

Cette conception à lame de verre n'est pas utilisée communément car dans la pratique habituelle on focalise la lumière avec une ouverture numérique image correspondant à celle de la fibre optique (NA ^{~} 0.22) pour le couplage dans une fibre optique. Or, dans ce cas, l'aberration sphérique induite par la lame est inévitable pour les rayons inclinés et détériore fortement la focalisation.

L'exemple de réalisation illustré à la figure 2 ne relève pas de l'invention telle que revendiquée. La figure 2 illustre un exemple de réalisation, dans lequel le composant optique réfractif 3 est une lame de verre et le diaphragme confocal est constitué par le cœur d'une fibre optique. La lame de verre 3 est disposée entre le système optique 1, ici la lentille de tube du microscope, et le plan 12 de l'image réelle formée par le système optique 1 dans lequel est situé l'extrémité de la fibre optique. La fibre optique est fixée par un connecteur standard 6 sur un support de connecteur, lui-même fixé rigidement au bâti du microscope, par exemple sur une platine 4 qui est fixée sur le corps du microscope. La lame de verre 3 est montée sur un support opto-mécanique de type trait-point-plan, qui permet d'incliner la lame suivant deux axes transverses à l'axe optique 10 du microscope. A cet effet, des vis de réglage 31, 32 sont accessibles à l'utilisateur depuis l'extérieur du microscope sans nécessité d'ouvrir le microscope. De façon avantageuse, le système optique 1, la lame de verre 3 et l'extrémité de la fibre optique restent cachés à l'intérieur du boîtier du microscope. Le système optique 1 et l'extrémité de la fibre optique restent fixes par rapport au corps du microscope. Seule la lame de verre orientable permet d'ajuster la position du faisceau focalisé par rapport au cœur de la fibre optique. Une rotation de la lame de seulement quelques degrés déplace la position de la lumière focalisée de quelques dizaines ou centaines micromètres en assurant la stabilité, une haute précision et la commodité d'ajustement. L'inclinaison d'un angle α de ±3 degrés appliquée à la lame de verre BK7 de 5mm d'épaisseur permet de déplacer latéralement le point focal de ±50 micromètres tout en maintenant une haute qualité de focalisation.

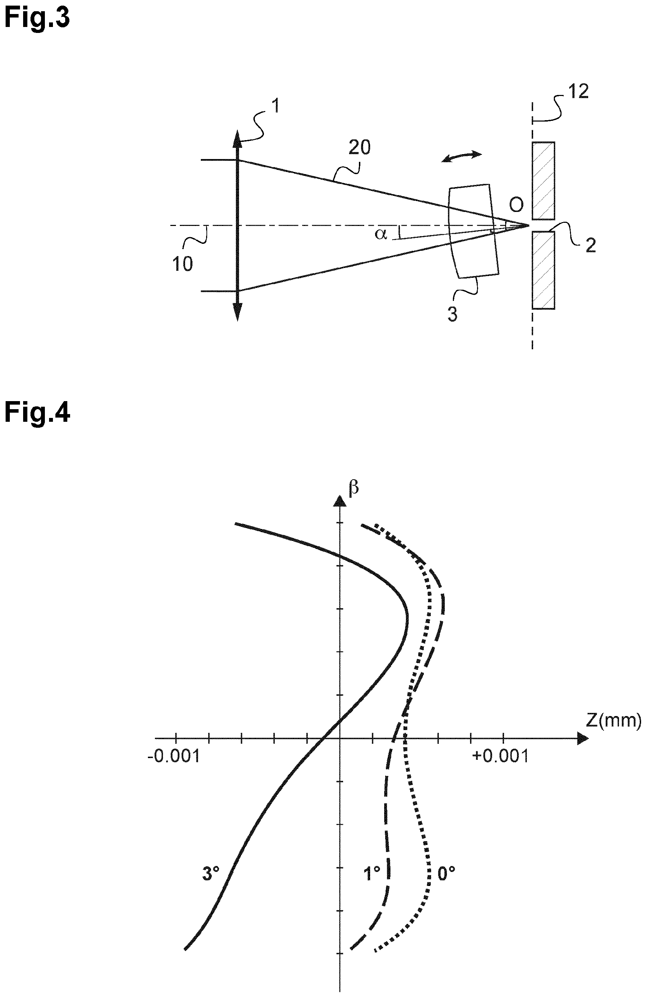

Selon un autre mode de réalisation, la réalisation de certaines fonctions du microscope demande l'ajustement de l'injection du rayonnement vers la fibre optique avec une ouverture numérique image comparable à l'ouverture numérique de la fibre. Dans ce mode de réalisation, le composant optique réfractif 3 ne peut plus être une lame plate car l'aberration sphérique de la lame plate dans le faisceau convergent atteint des valeurs inadmissibles comparables et même dépassant la résolution axiale de l'objectif de focalisation. Dans ce cas, on utilise à la place de la lame à faces planes et parallèles une lentille convergente. On utilise par exemple une lentille plan-convexe montée de façon à ce que le dioptre convexe sphérique soit disposé du côté de la source de rayonnement, comme illustré sur la figure 3. Cette lentille convergente est montée mobile en rotation autour d'un centre de rotation O sur l'axe optique 10, le centre de rotation O étant situé entre la lentille 3 et le plan focal 12. La rotation de la lentille convergente permet d'ajuster la position en Y et en Z du faisceau focalisé dans le plan focal 12 du système optique 1. De plus, l'aberration sphérique provoquée par l'épaisseur de la lentille dans le faisceau convergent peut être compensée par l'aberration sphérique du dioptre convexe. L'axe de rotation est transverse par rapport à l'axe optique du microscope au niveau du centre de rotation O proprement choisi entre la surface sphérique de lentille et le plan focal (extrémité de la fibre optique) pour minimiser l'aberration sphérique pendant la rotation de lentille.

La figure 4 représente des résultats d'analyse de fonctionnement du dispositif décrit selon le mode de réalisation illustré en figure 3 pour différentes valeurs d'angle d'inclinaison α respectivement de 0 degré (courbe en pointillés), 1 degré (courbe en tirets) et 3 degrés (courbe en trait plein). L'axe des abscisses du graphe représente la position des points focaux en millimètres. L'axe des ordonnées représente des points correspondant à l'ouverture numérique du rayon concerné, autrement dit l'angle d'incidence du rayon sur le plan image 12. Les points les plus éloignés de l'axe horizontal du graphe appartiennent aux rayons marginaux pour l'ouverture numérique image NA = 0.23. Le déplacement du point focal le long de l'axe optique, causé par l'inclinaison de la lentille vis à vis des rayons du faisceau, est clairement visible sur le graphe en fonction de l'ouverture des rayons du faisceau pour les trois inclinaisons de la lentille. Le système avec la lentille inclinée n'est plus un système centré. Les rayons +β et -β du plan méridional perpendiculaire à l'axe de rotation de lentille intersectent l'axe optique en des points différents. Pour cette analyse, nous avons utilisé une lentille 3 vendue par Edmund Optics #45-260. C'est une lentille plan-convexe (PCX) de verre n-BK7, ayant une épaisseur centrale de 3mm et dont le rayon R1 de la première surface est de 51.68mm. Les calculs sont effectués pour une lumière de longueur d'onde 529 nm focalisée par un objectif 1 ayant une ouverture numérique NA de 0.22. La lentille 3 positive augmente l'ouverture numérique image jusqu'à 0.23. Le centre de rotation O, placé entre la lentille 3 et le plan image 12 (où est placée l'extrémité de la fibre optique), est éloigné de 5.1 mm par rapport au sommet de la surface convexe de la lentille 3 et à 1.5mm du plan image 12. Un mécanisme de type cardan ou analogue est par exemple utilisé pour la réalisation du mouvement de rotation de la lentille. L'inclinaison de la lentille de ±3 degrés déplace latéralement le point focal de ±50 micromètres et provoque une aberration sphérique limitée à ± 1 micromètre. Toutefois, on note que la lentille placée dans le faisceau convergent monochromatique détériore la qualité de focalisation de façon négligeable car la valeur totale des aberrations ne dépasse pas environ un micromètre.

L'avantage technique du réglage fin selon l'invention proposée est obtenu grâce à un mouvement angulaire relativement important d'un petit élément optique réfractif 3 constitué par une lentille pour le réglage de la position du point de focalisation de plusieurs dizaines de microns transversalement à l'axe optique tout en restant focalisé dans une plage micrométrique le long de l'axe optique. La faible masse de l'élément optique réfractif réglable assure la stabilité et la résistance aux charges vibratoires de l'appareil.

Bien entendu, diverses autres modifications peuvent être apportées à l'invention dans le cadre des revendications annexées.

## Revendications

1. Microscope optique comprenant un système optique (1) et un diaphragme confocal (2), le diaphragme confocal (2) étant disposé dans un plan de Fourier (12) du microscope transversalement à un axe optique (10) du microscope, le plan de Fourier (12) étant conjugué optiquement avec un plan objet via le système optique (1), le diaphragme confocal (2) étant fixe par rapport au corps du microscope, le microscope étant apte à collecter un faisceau lumineux (20) issu du plan objet, le système optique (1) étant adapté pour focaliser le faisceau lumineux (20) dans le plan de Fourier (12) et pour injecter au moins une partie du faisceau lumineux (20) à travers le diaphragme confocal (2), le microscope optique comportant un composant optique réfractif (3) disposé entre le système optique (1) et le diaphragme confocal (2), le composant optique réfractif (3) étant monté mobile en rotation transversalement à l'axe optique (10) du microscope, de façon à ajuster une position latérale du faisceau lumineux focalisé par rapport au diaphragme confocal (2), **caractérisé en ce que** le diaphragme confocal (2) est formé par une extrémité d'une fibre optique ayant un cœur de dimensions transverses micrométriques, le système optique (1) présente une ouverture numérique image adaptée à celle de la fibre optique et le composant optique réfractif comprend une lentille convergente montée mobile en rotation autour d'un centre de rotation sur l'axe optique du microscope entre la lentille et le plan focal du système optique (1).

2. Microscope optique selon la revendication 1 comprenant un connecteur de fibre optique, le connecteur de fibre optique étant fixé rigidement au corps du microscope, le connecteur de fibre optique étant apte à recevoir l'extrémité de fibre optique de manière à ce que l'extrémité de fibre optique soit disposée dans un plan image réel (12) du microscope.

3. Microscope optique selon l'une des revendications 1 ou 2 comprenant une source laser adaptée pour générer un faisceau laser d'excitation, le diaphragme confocal étant disposé entre le système optique (1) et un détecteur adapté pour détecter un rayonnement de diffusion Raman.

4. Microscope optique selon l'une des revendications 1 à 3 + comprenant un boîtier opaque (4), le diaphragme confocal (2) et le composant optique réfractif (3) étant disposés à l'intérieur du boîtier, dans lequel le composant optique réfractif (3) est monté sur une platine (30) de translation et/ou de rotation, ladite platine (30) comportant des moyens de réglage opto-mécanique (31, 32), dans lequel les moyens de réglage opto-mécanique (31, 32) sont accessibles depuis l'extérieur du boîtier (4).

5. Microscope optique selon l'une des revendications 1 à 4 dans lequel le système optique (1) comprend un objectif de microscope et/ou une lentille de tube.

6. Procédé de microscopie optique comprenant les étapes de :
- Collecte d'un faisceau lumineux issu d'un plan objet et focalisation du faisceau lumineux collecté dans un plan de Fourier au moyen d'un système optique (1) dans un microscope, le plan de Fourier (12) étant conjugué optiquement avec le plan objet, le plan de Fourier (12) étant transverse à un axe optique (10) du microscope ;
- Transmission du faisceau lumineux collecté à travers un composant optique réfractif (3) disposé entre le système optique (1) et le plan de Fourier (12), le composant optique réfractif comprenant une lentille convergente montée mobile en rotation autour d'un centre de rotation sur l'axe optique du microscope entre la lentille et le plan focal du système optique (1) ;
- Focalisation du faisceau lumineux transmis sur un diaphragme confocal disposé dans le plan de Fourier (12) du microscope, le diaphragme confocal (2) étant fixe par rapport au corps du microscope, le diaphragme confocal (2) étant formé par une extrémité d'une fibre optique ayant un cœur de dimensions transverses micrométriques, le système optique (1) présentant une ouverture numérique image adaptée à celle de la fibre optique ;
- Ajustement du composant optique réfractif (3) par rotation transversalement à l'axe optique (10) du microscope de façon à ajuster une position latérale du faisceau lumineux focalisé par rapport au diaphragme confocal (2).

## Patentansprüche

1. Optisches Mikroskop mit einem optischen System (1) und einer konfokalen Blende (2), wobei die konfokale Blende (2) in einer Fourier-Ebene (12) des Mikroskops quer zu einer optischen Achse (10) des Mikroskops angeordnet ist, wobei die Fourier-Ebene (12) über das optische System (1) mit einer Objektebene optisch konjugiert ist, wobei die konfokale Blende (2) in Bezug auf den Körper des Mikroskops fest ist, wobei das Mikroskop dazu ausgelegt ist, einen von der Objektebene kommenden Lichtstrahl (20) einzufangen, wobei das optische System (1) dazu ausgelegt ist, den Lichtstrahl (20) in der Fourier-Ebene (12) zu fokalisieren und mindestens einen Teil des Lichtstrahls (20) durch die konfokale Blende (2) zu schicken, wobei das optische Mikroskop ein zwischen dem optischen System (1) und der konfokalen Blende (2) angeordnetes refraktives optisches Bauelement (3) aufweist, wobei das refraktive optische Bauelement (3) quer zur optischen Achse (10) des Mikroskops drehbeweglich angebracht ist, um eine seitliche Position des fokalisierten Lichtstrahls gegenüber der konfokalen Blende (2) einzustellen, **dadurch gekennzeichnet, daß** die konfokale Blende (2) durch ein Ende einer optischen Faser mit einer Seele mit mikrometrischen Querschnittsabmessungen gebildet ist, wobei das optische System (1) eine digitale Bildöffnung aufweist, die an jene der optischen Faser angepaßt ist, und das refraktive optische Bauelement eine Sammellinse aufweist, die um einen Drehpunkt auf der optischen Achse des Mikroskops drehbar zwischen der Linse und der Fokalebene des optischen Systems (1) angebracht ist.

2. Optisches Mikroskop gemäß Anspruch 1 mit einem Verbinder für optische Fasern, wobei der Verbinder für optische Fasern dazu ausgelegt ist, das Ende der optischen Faser so aufzunehmen, daß das Ende der optischen Faser in einer realen Bildebene (12) des Mikroskops liegt.

3. Optisches Mikroskop gemäß einem der Ansprüche 1 oder 2 mit einer Laserquelle, die dazu ausgelegt ist, einen Anregungslaserstrahl zu erzeugen, wobei die konfokale Blende zwischen dem optischen System (1) und einem Detektor liegt, der dazu ausgelegt ist, eine Ramanstrahlung zu erfassen.

4. Optisches Mikroskop gemäß einem der Ansprüche 1 bis 3 mit einem undurchsichtigen Gehäuse (4), wobei die konfokale Blende (2) und das refraktive optische Bauelement (3) innerhalb des Gehäuses angeordnet sind, bei dem das refraktive optische Bauelement (3) auf einer translationsfähigen und/oder drehbaren Platine (30) angebracht ist, wobei die Platine (30) optomechanische Einstellmittel (31, 32) aufweist, bei dem die optomechanischen Einstellmittel (31, 32) von außerhalb des Gehäuses (4) her zugänglich sind.

5. Optisches Mikroskop gemäß einem der Ansprüche 1 bis 4, bei dem das optische System (1) ein Mikroskopobjektiv und/oder eine Tubuslinse aufweist.

6. Verfahren optischer Mikroskopie mit den Schritten
- Einfangen eines aus einer Objektebene kommenden Lichtstrahls und Fokalisieren des eingefangenen Lichtstrahls in einer Fourier-Ebene mittels eines optischen Systems (1) in einem Mikroskops, wobei die Fourier-Ebene (12) optisch mit der Objektebene konjugiert ist, wobei die Fourier-Ebene (12) quer zu einer optischen Achse (10) des Mikroskops ist;
- Übertragen des eingefangenen Lichtstrahls durch ein refraktives optisches Bauelement (3) hindurch, wobei das refraktive optische Bauelement eine um einen Drehmittelpunkt auf der optischen Achse des Mikroskops drehbeweglich zwischen der Linse und der Fokalebene des optischen Systems (1) angebrachte Sammellinse aufweist;
- Fokalisieren des übertragenen Lichtstrahls auf eine in der Fourier-Ebene (12) des Mikroskops angeordnete konfokale Blende, wobei die konfokale Blende (2) in Bezug auf den Körper des Mikroskops fest ist, wobei die konfokale Blende (2) durch ein Ende einer optischen Faser gebildet ist, die eine Seele mit mikrometrischen Querschnittsabmessungen hat, wobei das optische System (1) eine digitale Bildöffnung aufweist, die an jene der optischen Faser angepaßt ist;
- Einstellen des refraktiven optischen Bauelements (3) durch Drehen quer zur optischen Achse (10) des Mikroskops derart, daß eine seitliche Position des fokalisierten Lichtstrahls in Bezug auf die konfokale Blende (2) eingestellt wird.

## Claims

1. An optical microscope comprising an optical system (1) and a confocal diaphragm (2), the confocal diaphragm (2) being arranged in a Fourier plane (12) of the microscope, transverse to an optical axis (10) of the microscope, the Fourier plane (12) being optically conjugate with an object plane via the optical system (1), the confocal diaphragm (2) being fixed relative to the microscope body, the microscope being able to collect a light beam (20) from the object plane, the optical system (1) being adapted to focus the light beam (20) in the Fourier plane (12) and to inject at least a portion of the light beam (20) through the confocal diaphragm (2), the optical microscope including a refractive optical component (3) arranged between the optical system (1) and the confocal diaphragm (2), the refractive optical component (3) being rotatably mounted transverse to the optical axis (10) of the microscope, in order to adjust a lateral position of the focused light beam relative to the confocal diaphragm (2), **characterized in that** the confocal diaphragm (2) is formed by an end of an optical fibre having a core with micrometric cross-sectional dimensions, the optical system (1) having an image numerical aperture adapted to that of the optical fibre and the refractive optical component comprises a converging lens rotatably mounted about a centre of rotation on the microscope optical axis between the lens and the focal plane of the optical system (1).

2. The optical microscope according to claim 1, comprising an optical fibre connector, the optical fibre connector being attached rigidly to the microscope body, the optical fibre connector being suitable for receiving the optical fibre end in such a way that the optical fibre end is arranged in a real image plane (12) of the microscope.

3. The optical microscope according to any one of claims 1 or 2, comprising a laser source adapted to generate an excitation laser beam, the confocal diaphragm being arranged between the optical system (1) and a detector adapted to detect a Raman scattering radiation.

4. The optical microscope according to any one of claims 1 to 3, comprising an opaque housing (4), the confocal diaphragm (2) and the refractive optical component (3) being arranged inside the housing, the refractive optical component (3) being mounted on a translation and/or rotation stage (30), said stage (30) including optomechanical adjustment means (31, 32), the optomechanical adjustment means (31, 32) being accessible from the outside of the housing (4).

5. The optical microscope according to any one of claims 1 to 4, wherein the optical system (1) comprises a microscope objective and/or a tube lens.

6. An optical microscopy method comprising the following steps:
- collecting a light beam from an object plane and focusing the collected light beam in a Fourier plane by means of an optical system (1) in a microscope, the Fourier plane (12) being optically conjugate with the object plane, the Fourier plane (12) being transverse to an optical axis (10) of the microscope;
- transmitting the collected light beam through a refractive optical component (3) arranged between the optical system (1) and the Fourier plane (12), the refractive optical component comprising a converging lens rotatably mounted about a centre of rotation on the microscope optical axis between the lens and the focal plane of the optical system (1);
- focusing the light beam transmitted on a confocal diaphragm arranged in the Fourier plane (12) of the microscope, the confocal diaphragm (2) being fixed with respect to the microscope body, the confocal diaphragm (2) being formed by an end of an optical fibre having a core with micrometric cross-sectional dimensions, the optical system (1) having an image numerical aperture adapted to that of the optical fibre;
- adjusting the refractive optical component (3) by rotation transverse to the microscope optical axis (10) in order to adjust a lateral position of the focused light beam relative to the confocal diaphragm (2).
